# EUROPÄISCHE PATENTSCHRIFT

(11) **EP 0 474 914 B1**
(45) Veröffentlichungstag und Bekanntmachung des Hinweises auf die Patenterteilung: **12.04.1995**
(21) Anmeldenummer: 90117771.7
(22) Anmeldetag: 14.09.1990
(51) Int. Cl.: H04B 10/24, H04J 14/02

(54) **Bidirektionales Telekommunikationssystem**
A bi-directional telecommunications system
Système de télécommunication bidirectionnel

(43) Veröffentlichungstag der Anmeldung: 18.03.1992
(73) Patentinhaber: SIEMENS AKTIENGESELLSCHAFT, 80333 München (DE)
(72) Erfinder: Sailer, Heinrich, Dipl.-Ing., D-8027 Neuried (DE)

(56) Entgegenhaltungen:
- EP-A- 0 193 190
- EP-A- 0 313 738
- DE-A- 3 010 802
- US-A- 4 061 577
- PATENT ABSTRACTS OF JAPAN, Band 9, Nr. 85 (E-308)[1808], 13. April 1985; & JP-A-59 216 335 (FUIJTSU) 06.12.1984

## Beschreibung

Neuere Entwicklungen der Fernmeldetechnik führen zu Lichtwellenleiter-Telekommunikationssystemen, in denen die Lichtwellenleiter jeweils in beiden Übertragungsrichtungen ausgenutzt werden können (Geisler, Beaven, Boutruche: Optical Fibres, EPO APPLIED TECHNOLOGIES SERIES, VOL.5, 1986, 552...586), und zwar im Wellenlängengleichlagebetrieb unter Verwendung von z.B. mit einem teildurchlässigen Spiegle oder einem (integriert-optischen) Richtkoppler aufgebauten Richtungsweichen (Zürich Seminar '86 Conf. Papers B3, 1 in Table 1) oder auch im Wellenlängegetrenntlagebetrieb, d.h. im sogenannten bidirektionalen Wellenlängenmultiplex (WDM - Wavelength Division Multiplex), unter Verwendung von entsprechenden Wellenlängenfiltern (Zürich Seminar '86 Conf. Papers B3, 3 in Table 1), indem für die Signalübertragung über die (vorzugsweise Monomode-)Lichtleitfaser in der einen Übertragungsrichtung Lichtwellen niedrigerer Wellenlänge und für die Signalübertragung in der anderen Übertragungsrichtung Lichtwellen höherer Wellenlänge verwendet werden. In beiden Fällen sind an den beiden Enden des Lichtwellenleiters entsprechende optische Weichenbausteine vorzusehen, die jeweils eine gesonderte lichtleitende Verbindung vom Lichtwellenleiter zum jeweiligen optoelektrischen Wandler und vom jeweiligen elektrooptischen Wandler zum Lichtwellenleiter bewirken. Richtungsweichen können auch in Verbindung mit einem Zeitgetrenntlagebetrieb vorgesehen sein (Zürich Seminar'86 Conf. Papers B3, 4.1 in Table 1), während umgekehrt bei Zeitgetrenntlagebetrieb keine zusätzlichen Richtungsweichen vorzusehen sind, wenn die lichtemittierende Diode bzw. eine zu deren Arbeitspunktregelung vorgesehene Monitor-Photodiode alternierend auch als Empfangsdiode genutzt wird (Zürich Seminar '86 Conf. Papers B3, 4.3 in Table 1; DE-A1-3 822 803; EP-A-313738).

Die Einführung neuer Telekommunikationssysteme mit LWL-Anschlußleitungen hängt ganz allgemein ab von Art und Umfang der bereits vorhandenen Fernmeldeinfrastrukturen mit den darin bereitgestellten Telekommunikationsdiensten und von der Nachfrage nach neuen Breitbandkommunikationsdiensten. Dabei wird im Bereich der Privathaushalte das potentiell größte Anschlußvolumen gesehen; dieses Anschlußpotential konkretisiert sich indessen zu einer effektiven Anschlußnachfrage nicht ohne entsprechend niedrige Kosten eines Breitband-Teilnehmeranschlusses.

In diesem Zusammenhang hat man in einem bidirektionalen LWL-Telekommunikationssystem für Wellenlängengetrenntlagebetrieb (Bidirektionales WDM) zwischen einer zentralen Telekommunikationsstelle und einer Mehrzahl von dezentralen Telekommunikationsstellen, insbesondere mit einem zwischen einer Vermittlungsstelle und einer Mehrzahl von Teilnehmerstellen verlaufenden passiven LWL-Busnetz, bereits vorgesehen (EP-Anmeldung Nr. 89117968.1, veröffentlicht am 3.4.91 unter EP-A-419710), daß lediglich in der zentralen Telekommunikationsstelle ein elektrooptisches Sendeelement und ein optoelektrisches Empfangselement vorgesehen sind, die für den Wellenlängengetrenntlagebetrieb ausgelegt sind, während in den dezentralen Telekommunikationsstellen jeweils nur ein wellenlängenfilterfreier, im Zeitgetrenntlageverfahren arbeitender und für die Aussendung von Licht mit einer solchen Wellenlänge, für deren Empfang die zentrale Telekommunikationsstelle eingerichtet ist, ausgelegter kombinierter optoelektrischer Empfangs-/elektrooptischer Sendebaustein vorgesehen ist, der mit einem mit einer Monitor-Photodiode versehenen Laser-Modul gebildet ist, dessen Monitordiode alternierend als Empfangsdiode genutzt wird.
Bei einem Zeitgetrenntlagebetrieb ist allerdings, bedingt durch die Signallaufzeit und abhängig von der Burst-Datenrate und der Burst-Länge, die überbrückbare Entfernung prinzipiell begrenzt.

Die Erfindung stellt sich nun die Aufgabe, eine solche Begrenzung und weitere Nachteile eines Zeitgetrenntlagebetriebs (wie z.B. der erhöhte Aufwand für Zwischenspeicherung und Systemsteuerung verbunden mit einer in vielen Fällen unzulässigen zusätzlichen Signallaufzeit) für ein bidirektionales LWL-Telekommunikationssystem mit einer Mehrzahl von Telekommunikationseinrichtungen, die jeweils einen kombinierten optoelektrischen Empfangs-/elektrooptischen Sendebaustein mit einem mit einer Monitor-Photodiode versehenen Laser-Modul aufweisen, dessen Monitordiode außer zur Arbeitpunktregelung auch als Empfangsdiode genutzt wird, zu vermeiden; dies wird erfindungsgemäß dadurch erreicht, daß die Telekommunikationseinrichtungen im Frequenzgetrenntlageverfahren arbeiten, indem eine der Laser-Sendediode vorgeschaltete Modulationsschaltung das elektrische Sendesignal in ein anderes als das von dem elektrischen Empfangssignal belegte Frequenzband umsetzt und eine der Monitordiode nachgeschaltete Frequenzweiche mit ihrem Ausgang für Signale des Empfangssignal-Frequenzbandes zu einer Demodulationsschaltung für das Empfangssignal und mit ihrem Ausgang für Signale des Sendesignal-Frequenzbandes zur Arbeitspunktregelschaltung der Laser-Sendediode führt.

Die Erfindung bringt den Vorteil mit sich, in einem LWL-Telekommunikationssystem der genannten Art einen Duplexverkehr auch unter Vermeidung sowohl eines aufwendigen Wellenlängengetrenntlagebetriebs als auch eines Zeitgetrenntlagebetriebs ermöglichen zu können, ohne dazu jeweils eine gesonderte Empfangsdiode mit einem optischen Spliter und den zugehörigen Faserankopplungen vorsehen zu müssen.

Weitere Besonderheiten der Erfindung werden aus der nachfolgenden näheren Erläuterung von Ausführungsbeispielen für ein Telekommunikationssystem gemäß der Erfindung anhand der Zeichnungen ersichtlich. Dabei zeigt
- FIG 1: einen mit einer Monitor-Photodiode versehenen Laser-Modul in einer LWL-Telekommunikationseinrichtung;
- FIG 2: zeigt schaltungstechnische Einzelheiten eines Ausführungsbeispiels eines mit einem derartigen Laser-Modul gebildeten kombinierten optoelektrischen Empfangs-/elektrooptischen Sendebausteins gemäß der Erfindung, und
- FIG 3: zeigt ein passives optisches Telekommunikationssystem mit einer Mehrzahl von Telekommunikationseinrichtungen gemäß der Erfindung.

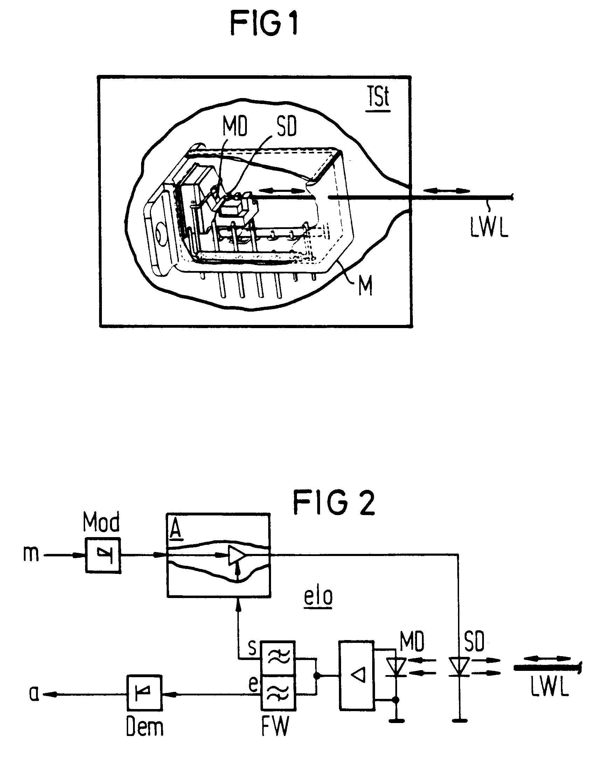

In der Zeichnung FIG 1 ist schematisch eine LWL-Telekommunikationseinrichtung TSt dargestellt, die an einen Lichtwellenleiter LWL angeschlossen ist und die einen mit einer Laser-Sendediode SD und einer Monitor-Photodiode MD versehenen Laser-Modul M aufweist, wie er beispielsweise aus telcom report 10(1987)Special "Multiplex- und Leitungseinrichtungen", 146...150, Bild 4, bekannt ist. Die Laser-Sendediode SD setzt dabei elektrische Sendesignale in von der Telekommunikationseinrichtung TSt weg über den Lichtwellenleiter LWL zu übertragende Lichtsignale um; die Monitordiode MD möge außer zur Arbeitspunktregelung für die Laser-Sendediode SD auch als - über den Lichtwellenleiter LWL zur Telekommunikationseinrichtung TSt hin übertragene Lichtsignale in elektrische Empfangssignale umsetzende - Empfangsdiode genutzt werden. Dabei ist der Laser-Modul M (in FIG 1) mit seinen beiden photoelektrischen Dioden SD, MD Teil eines kombinierten optoelektrischen Empfangs-/elektrooptischen Sendebausteins e|o, wie er in weiteren schaltungstechnischen Einzelheiten als Beispiel in FIG 2 skizziert ist.

Gemäß FIG 2 gelangt das über den Lichtwellenleiter LWL zum optoelektrischen Empfangs-/elektrooptischen Sendebaustein e|o hin übertragene optische Empfangssignal - ebenso wie ein Teil des von der Laser-Sendediode SD ausgesendeten, vom optoelektrischen Empfangs-/elektrooptischen Sendebaustein e|o weg über den Lichtwellenleiter LWL zu übertragenden optischen Sendesignals - zur Monitordiode MD, wo die optischen Signale in entsprechende elektrische Signale umgewandelt werden. Der Monitordiode MD ist über einen Empfangsverstärker eine Frequenzweiche FW nachgeschaltet, die mit einem Ausgang e für das elektrische Empfangssignal zu einer Empfangssignal-Demodulationsschaltung Dem führt, deren Ausgang den elektrischen Ausgang a des optoelektrischen Empfangs-/elektrooptischen Sendebausteins e|o bilden möge; die Frequenzweiche FW ist dabei so ausgebildet, daß sie in dem vom modulierten elektrischen Empfangssignal belegten Frequenzband gerade zu ihrem Ausgang e hin übertragungsfähig ist.

Mit einem zweiten Ausgang s führt die Frequenzweiche FW zu einer Arbeitspunktregelschaltung A der Laser-Sendediode SD, durch die der von der Laser-Sendediode SD ausgehende Lichtstrom geregelt wird, wie dies an sich bekannt ist und daher hier nicht näher erläutert werden muß.

Zu diesem Ausgang s hin ist die Frequenzweiche FW, die als einfache Hochpaß-Tiefpaß-Schaltung ausgebildet sein kann, in einem anderen als dem vom modulierten elektrischen Empfangssignal belegten Frequenzband übertragungsfähig, und zwar in einem Frequenzband, das von dem der Laser-Sendediode SD zugeführten elektrischen Sendesignal belegt wird. In ein solches anderes als das von dem elektrischen Empfangssignal belegte Frequenzband wird nämlich das elektrische Sendesignal in einer der Laser-Sendediode SD - im beispiel über ihre Arbeitspunktregelschaltung A - vorgeschalteten Modulationsschaltung Mod, deren Eingang den elektrischen Eingang m des optoelektrischen Empfangs-/elektrooptischen Sendebausteins e|o bilden möge, umgesetzt. Die Modulation kann dabei in bekannter, in der Drahtnachrichten- oder Richtfunktechnik üblicher Weise beispielsweise in Form einer Amplitudenmodulation, eines Frequency oder Phase Shift Keying oder auch nach einem anderen, ggf. auch mehrstufigen Modulationsverfahren vor sich gehen, ohne daß dies hier noch näher erläutert werden muß.

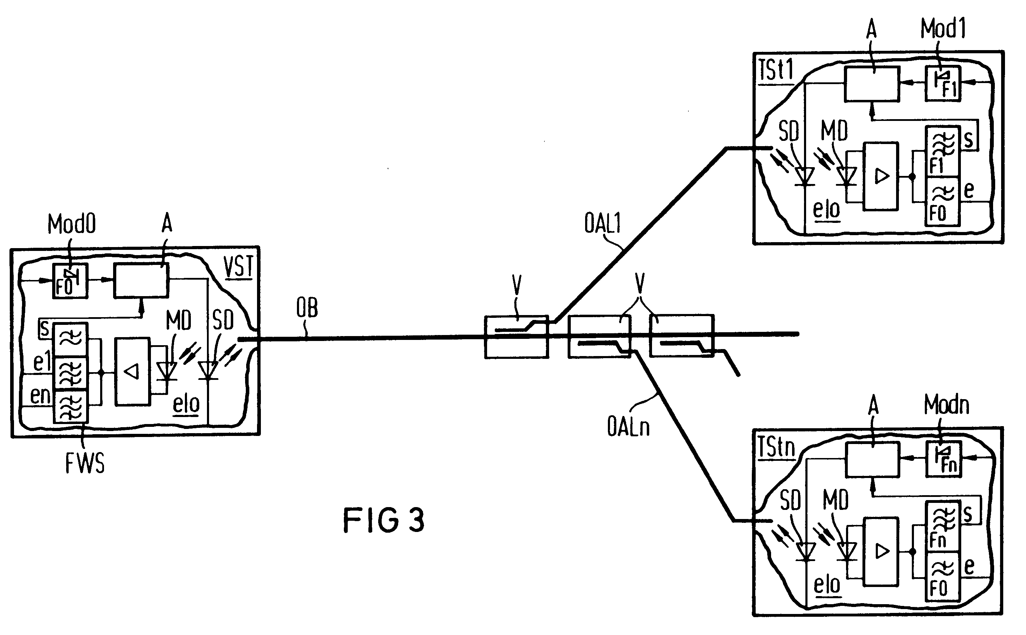

Damit ist in der den optoelektrischen Empfangs-/elektrooptischen Sendebaustein e|o (in FIG 2) enthaltenden Telekommunikationseinrichtung TSt (in FIG 1) die gewünschte Frequenzgetrenntlage von (elektrischem) Empfangssignal und (elektrischem) Sendesignal erreicht, so daß die Telekommunikationseinrichtung TSt über den Lichtwellenleiter LWL Duplexverkehr durchführen kann.
Dabei kann, ohne daß dies in den Zeichnungen noch weiter dargestellt ist, der gemäß FIG 1 und FIG 2 auf seiner einen Seite mit der Telekommunikationseinrichtung TSt (in FIG 1) abgeschlossene Lichtwellenleiter LWL auf seiner anderen Seite mit einer entsprechenden Telekommunikationseinrichtung abgeschlossen sein, so daß dann das bidirektionale LWL-Telekommunikationssystem die Form eines sogenannten optischen Links hat.
Die Erfindung ist auf eine derartiges bidirektionales LWL-Telekommunikationssystem jedoch nicht beschränkt; es ist vielmehr beispielsweise auch möglich, daß die Telekommunikationseinrichtung TSt (in FIG 1) und der Lichtwellenleiter LWL auch zu einem optischen Local Area Network (LAN) gehören oder daß es sich bei der Telekommunikationsstelle TSt um eine dezentrale Einrichtung (Teilnehmerstelle oder jeweils eine Mehrzahl von Teilnehmerstellen zusammenfassende sog. Distant Unit) eines passiven optischen Telekommunikationssystems handelt, in dem jeweils eine Mehrzahl solcher dezentraler Einrichtungen jeweils über eine eigene Lichtwellenleiter-Anschlußleitung mit einem Lichtwellenleiteranschluß einer - insbesondere durch eine Vermittlungsstelle gegebenen - zentralen Einrichtung oder mit einem optischen Verzweiger verbunden ist, der direkt oder über wenigstens einen weiteren optischen Verzweiger mit einem gemeinsamen Lichtwellenleiteranschluß der zentralen Einrichtung über einen Lichtwellenleiter-Bus verbunden ist, wie es auch in FIG 3 skizziert ist:

In dem in FIG 3 schematisch dargestellte bidirektionalen LWL-Telekommunikationssystem erstreckt sich ein passives (vorzugsweise Monomode-)LWL-Busnetz zwischen einer zentralen Telekommunikationseinrichtung VSt, bei der es sich beispielsweise um eine Vermittlungsstelle handeln kann, und einer Mehrzahl von dezentralen Telekommunikationseinrichtungen TSt1,...,TStn. Solche dezentralen Telekommunikationseinrichtungen können Teilnehmerstellen oder auch sog. Distant Units sein, d.h. mit einem elektrooptischen/optoelektrischen Wandler versehene Interface-Einrichtungen, die mit Hilfe eines auf der elektrischen Seite des Wandlers liegenden, in FIG 3 nicht weiter dargestellten Multiplexers/Demultiplexers ggf. bis zu 32 ISDN-B-Kanäle zusammenfassen bzw. aufsplitten mögen.
In diesem LWL-Telekommunikationssystem sind die dezentralen Einrichtungen TSt über einen einfaserigen LWL-Bus OB mit einem gemeinsamen LWL-Multiplexanschluß der zentralen Telekommunikationseinrichtung VSt verbunden; die den einzelnen dezentralen Einrichtungen TSt1,...,TStn zugehörigen LWL-Anschlußleitungen OAL1,...,OALn mögen dabei über - z.B. in Kabelverzweigergehäusen untergebrachte - passive optische Verzweiger V mit dem zugehörigen LWL-Bus OB verbunden sein, und zwar entweder direkt oder auch über weitere solche Verzweiger. Als optische Verzweiger können dabei beispielsweise Durchgangsmischer oder optische Richtkoppler Anwendung finden. Es ist auch möglich, für eine Mehrzahl von Lichtwellenleiter-Anschlußleitungen (OAL) einen gemeinsamen optischen Verzweiger vorzusehen, wie dies an sich (z.B. aus EP-A-0 171 080) bekannt ist und daher hier nicht näher dargestellt zu werden braucht.

In dem in FIG 3 skizzierten Telekommunikationssystem mögen die einzelnen Telekommunikationseinrichtungen TSt1,...,TStn und VSt jeweils mit einem optoelektrischen Empfangs-/elektrooptischen Sendebaustein e|o versehen sein, wie er im Prinzip bereits anhand der FIG 2 erläutert wurde: Es ist also jeweils eine Laser-Sendediode SD und eine zugleich auch als Empfangsdiode genutzte Monitordiode MD vorgesehen, der über einen Empfangsverstärker eine Frequenzweichenschaltung nachgeschaltet ist, die mit einem Ausgang s für Signale des jeweiligen Sendesignal-Frequenzbandes zur Arbeitspunktregelschaltung A der Laser-Sendediode SD führt und der jeweils an einem Ausgang (e) für Signale des jeweiligen Empfangssignal-Frequenzbandes eine (in FIG 3 nicht mehr dargestellte) Demodulationsschaltung für das betreffende Empfangssignal nachgeschaltet ist.
Zur Richtungstrennung ist in dem in FIG 3 skizzierten Telekommunikationssystem ein Frequenzgetrenntlagebetrieb wie folgt vorgesehen:
Zur Signalübertragung in Abwärtsrichtung, d.h. von der zentralen Telekommunikationsstelle VSt zu den dezentralen Telekommunikationsstellen TSt1,...,TStn hin, setzt in der zentralen Telekommunikationsstelle VSt die deren Laser-Sendediode SD vorgeschaltete Modulationsschaltung Mod0 das elektrische Sendesignal in ein Frequenzenband F0 um, dessen Signale in den dezentralen Telekommunikationsstellen TSt1,...,TStn jeweils zum Frequenzweichen-Ausgang e und damit zu der jeweils nachfolenden Demodulationsschaltung gelangen.
In der umgekehrten Übertragungsrichtung mögen die Modulationsschaltungen Mod1,...,Modn der dezentralen Telekommunikationseinrichtungen TSt1,...,TStn das jeweilige elektrische Sendesignal in ein jeweils telekommunikationseinrichtungs-individuelles Frequenzband F1,...,Fn einer entsprechenden Mehrzahl von Frequenzbändern umsetzen, die sich jeweils von dem zuvor genannten Frequenzband F0 unterscheiden, das in allen dezentralen Telekommunikationseinrichtungen TSt1,...,TStn in gleicher Weise vom jeweiligen elektrischen Empfangssignal belegt wird. In der zentralen Telekommunikationseinrichtung VSt ist dann der Monitordiode MD nicht nur eine einfache Frequenzweiche mit zwei Ausängen nachgeschaltet, sondern eine Frequenzweichenschaltung FWS mit einer entsprechenden Mehrzahl von Ausgängen e1,...,en für Signale der genannten telekommunikationseinrichtungs-individuellen Frequenzbänder F1,...,Fn; diese Ausgänge e1,...,...,en führen jeweils zu einer dem jeweiligen Frequenzband zugeordneten, in FIG 3 nicht weiter dargestellten Demodulationsschaltung für das von der betreffenden dezentralen Telekommunikationseinrichtung herkommende Empfangssignal führen. Der Frequenzweichenschaltungs-Ausgang s für Signale des Sendesignal-Frequenzbandes F0 der zentralen Telekommunikationseinrichtung VSt führt wiederum zu deren Arbeitspunktregelschaltung A ihrer Laser-Sendediode SD.
Man erhält damit nicht nur die gewünschte Frequenzgetrenntlage von in Abwärtsrichtung übertragenen Signalen einerseits und in Aufwärtsrichtung übertragenen Signalen andererseits, sondern zugleich auch eine im Frequenzmultiplex vor sich gehende Aufwärts-Übertragung von Signalen verschiedener dezentraler Einrichtungen, was im Vergleich zu einem an sich auch möglichen Zeitmultiplex- bzw. TDMA-Betrieb keinen Synchronisations- bzw. Verzögerungsaufwand zur Einhaltung vorgeschriebener Zeitlagen erfordert.

## Patentansprüche

1. Bidirektionales LWL-Telekommunikationssystem mit einer Mehrzahl von Telekommunikationseinrichtungen (TSt), die jeweils einen kombinierten optoelektrischen Empfangs-/elektrooptischen Sendebaustein (e|o) mit einem mit einer Monitor-Photodiode (MD) versehenen Laser-Modul (M) aufweisen, dessen Monitordiode (MD) ausser zur Arbeitpunktregelung auch als Empfangsdiode genutzt wird,
**dadurch gekennzeichnet**,
daß die Telekommunikationseinrichtungen (TSt) dazu geeignet sind, im Frequenzgetrenntlageverfahren zu arbeiten, indem eine der Laser-Sendediode (SD) vorgeschaltete Modulationsschaltung (Mod) derart ausgestaltet ist, daß sie das elektrische Sendesignal in ein anderes als das von dem elektrischen Empfangssignal belegte Frequenzband umsetzt und eine der Monitordiode (MD) nachgeschaltete Frequenzweiche (FW) mit ihrem Ausgang (e) für Signale des Empfangssignal-Frequenzbandes zu einer Demodulationsschaltung (Dem) für das Empfangssignal und mit ihrem Ausgang (s) für Signale des Sendesignal-Frequenzbandes zur Arbeitspunktregelschaltung (A) der Laser-Sendediode (SD) führt.

2. Telekommunikationssystem nach Anspruch 1,
**dadurch gekennzeichnet**,
daß
bei einer Mehrzahl von dezentralen Telekommunikationseinrichtungen (TSt1,...,TStn), die jeweils über eine eigene Lichtwellenleiter-Anschlußleitung (OAL1,...,OALn) mit einem optischen Verzweiger (V) verbunden sind, der direkt oder über wenigstens einen weiteren optischen Verzweiger mit einem gemeinsamen Lichtwellenleiteranschluß einer zentralen Telekommunikationseinrichtung (VSt) über einen Lichtwellenleiter-Bus (OB) verbunden ist,
die Modulationsschaltungen (Mod1,...,Modn) solcher dezentraler Telekommunikationseinrichtungen (TSt1,...,TStn) das jeweilige elektrische Sendesignal in ein jeweils telekommunikationseinrichtungs-individuelles Frequenzband (F1,...,Fn) einer entsprechenden Mehrzahl von zu dem vom jeweiligen elektrischen Empfangssignal belegten, in allen dezentralen Ielekommunikationseinrichtungen (TSt1,...,TStn) gleichen Frequenzband (F0) unterschiedlichen Frequenzbändern (F1,...,Fn) umsetzen und
eine der Monitordiode (MD) einer solchen zentralen Telekommunikationseinrichtung (VSt) nachgeschaltete Frequenzweichenschaltung (FWS) mit einer entsprechenden Mehrzahl von Ausgängen (e1,...,en) für Signale der genannten telekommunikationseinrichtungs-individuellen Frequenzbänder (F1,...,Fn) jeweils zu einer dem jeweiligen Frequenzband zugeordneten Demodulationsschaltung für das betreffende Empfangssignal und mit ihrem Ausgang (s) für Signale des das zuvor genannte gleiche Frequenzband (F0) bildenden Sendesignal-Frequenzbandes der zentralen Telekommunikationseinrichtung (VSt) zu deren Arbeitspunktregelschaltung (A) ihrer Laser-Sendediode (SD) führt.

## Claims

1. Bidirectional optical waveguide telecommunications system having a plurality of telecommunications equipment (TSt), which have, respectively, a combined optoelectrical receiving/electrooptic transmitting module (e|o) having a laser module (M) which is provided with a monitor photodiode (MD) and whose monitor diode (MD), apart from operating point control, is also used as a receiving diode, characterized in that the telecommunications equipment (TSt) is suitable for operation using the frequency division multiplex method, in that a modulation circuit (Mod) connected upstream of the laser transmitting diode (SD) is configured in such a way that it converts the electrical transmission signal into a frequency band other than that occupied by the electrical received signal, and a frequency separating filter (FW) connected downstream of the monitor diode (MD) is connected by its output (e) for signals from the received signal frequency band to a demodulation circuit (Dem) for the received signal and by its output (s) for signals from the transmission signal frequency band to the operating point control circuit (A) of the laser transmitting diode (SD).

2. Telecommunications system according to Claim 1, characterized in that
in the case of a plurality of decentralized telecommunications equipment (TSt1, ..., TStn), which are respectively connected via a dedicated optical waveguide connecting lead (OAL1,...,OALn) to an optical brancher (V), which is connected directly or via at least one further optical brancher to a common optical waveguide connection of a central telecommunications equipment (VSt) via an optical waveguide bus (OB),
the modulation circuits (Mod1,...,Modn) of such decentralized telecommunications equipment (TSt1,...,TStn) convert the respective electrical transmission signal into a frequency band (F1,...,Fn), individual to each telecommunications equipment, of a corresponding plurality of frequency bands (F1,...,Fn) which are different from the frequency band (F0), which is occupied by the respective electrical received signal and is the same in all decentralized telecommunications equipment (TSt1,...,TStn), and a frequency separating filter circuit (FWS) connected downstream of the monitor diode (MD) of such a central telecommunications equipment (VSt) is connected, by a corresponding plurality of outputs (e1,...,en) for signals in the said frequency bands (F1,...,Fn), individual to the telecommunications equipment, in each case to a demodulation circuit allocated to the respective frequency band for the relevant received signal and, by its output (s) for signals of the transmission signal frequency band, forming the same previously mentioned frequency band (FO), of the central telecommunications equipment (VSt), to its working point control circuit (A) of its laser transmitting diode (SD).

## Revendications

1. Système de télécommunication bidirectionnel à guides d'ondes lumineuses, comportant une multiplicité de dispositifs de télécommunication (TSt), qui possèdent chacun un module combiné de réception optoélectrique/d'émission électro-optique (e|o) comportant un module laser (M) pourvu d'une photodiode de contrôle (MD), qui est utilisée, outre pour la régulation du point de fonctionnement, également en temps que diode de réception, caractérisé par le fait que les dispositifs de télécommunication (TSt) sont appropriés pour fonctionner selon le procédé à positions séparées des fréquences, selon lequel un circuit de modulation (Mod) branché en amont de la diode d'émission laser (SD), est agencée de telle sorte qu'elle amène par conversion le signal électrique d'émission dans une autre bande de fréquences que celle occupée par le signal de réception électrique, et qu'un aiguillage de fréquence (FW), branché en aval de la diode de contrôle (MD), est raccordé, par sa sortie (e) pour des signaux de la bande des fréquences du signal de réception, à un circuit de démodulation (Dem) pour le signal de réception et, par sa sortie (s) pour des signaux de la bande des fréquences du signal d'émission, au circuit (A) de régulation du point de fonctionnement, de la diode d'émission laser (SD).

2. Système de télécommunication suivant la revendication 1, caractérisé par le fait que, dans le cas d'une multiplicité de dispositifs décentralisés de télécommunication d'entrée (TSt1,...,TStn), qui sont reliés respectivement, par l'intermédiaire d'une ligne particulière (OAL1,...,OALn) de raccordement de guides d'ondes lumineuses, à un dispositif d'embranchement optique (V), qui est relié directement ou par l'intermédiaire d'au moins un autre dispositif d'embranchement optique, à une borne commune de guides d'ondes lumineuses d'un dispositif central de télécommunication (VSt) par l'intermédiaire d'un bus (OB) à guides d'ondes lumineuses,
les circuits de modulation (Mod1,...,Modn) de tels dispositifs décentralisés de télécommunication (TSt1,..., TStn) amènent par conversion le signal d'émission électrique respectif dans une bande de fréquences (F1,...,Fn) prévue individuellement pour chaque dispositif de télécommunication, d'une multiplicité correspondante de bandes de fréquences (F1,...,Fn), qui sont différentes de la bande de fréquences (F3) qui est occupée par le signal de réception électrique respectif et qui est la même dans tous les dispositifs décentralisés de télécommunication, et
un circuit formant aiguillage de fréquences (FWS), qui est branché en aval de la diode de contrôle (MD) d'un tel dispositif central de télécommunication (VSt), est raccordé, par une multiplicité correspondante de sortie (e1,...,en) pour des signaux desdites bandes de fréquences (F1,...,Fn) individuelles pour les différents dispositifs de télécommunication, respectivement à un circuit de démodulation associé à la bande respective de fréquence, pour le signal de réception considéré, et, par sa sortie (s) pour des signaux de la bande de fréquence du signal d'émission, qui forme la même bande de fréquence (F1) mentionnée précédemment, du dispositif central de télécommunication (VSt), au circuit (A) de régulation du point de fonctionnement de sa diode laser d'émission (SD).
